# EUROPEAN PATENT SPECIFICATION

(11) **EP 4 179 927 B1**
(45) Date of publication and mention of the grant of the patent: **24.06.2026**
(21) Application number: 22216830.4
(22) Date of filing: 01.09.2016
(51) Int. Cl.: A47J 31/00

(54) **DISPENSING DEVICE FOR DISPENSING A HOT DRINK**
AUSGABEVORRICHTUNG ZUR AUSGABE EINES HEISSGETRÄNKS
DISPOSITIF DE DISTRIBUTION POUR DISTRIBUER UNE BOISSON CHAUDE

(30) Priority: 01.09.2015 NL 2015386
(43) Date of publication of application: 17.05.2023
(62) Divisional of application: 16775874.7
(73) Proprietor: Quooker International B.V., 2984 AJ Ridderkerk (NL)
(72) Inventor: PETERI, Niels Theodoor, 3062 JG Rotterdam (NL)
(74) Representative: EP&C

(56) References cited:
- EP-A1- 0 467 480
- WO-A1-2014/147501
- US-A1- 2014 120 223

## Description

The invention relates to a dispensing device for dispensing a hot drink. In particular, the invention relates to a dispensing device for dispensing a hot drink using a capsule containing an ingredient for preparing the hot drink.

An embodiment of such a dispensing device comprises a hot water device for providing hot water and a preparing and dispensing unit for preparing a hot drink and dispensing the hot drink. The preparing and dispensing unit comprises a capsule holder for holding a capsule in a capsule chamber, a dispensing opening for dispensing a hot drink, and a dispensing channel for passing the hot drink from the capsule chamber to the dispensing opening. The dispensing device furthermore comprises a hot water channel for passing hot water from the hot water device to the capsule chamber. Such a device is described in US2014/120223.

Such dispensing devices and capsules for use therein are known per se. The invention is aimed in particular at the use of a cup-shaped capsule for preparing coffee or other hot drinks, i.e. a frustoconical container which contains an ingredient for preparing coffee or other hot drinks. By forcing hot water through this cup, the hot drink can be prepared and dispensed through the dispensing channel. This type of capsule is usually referred to as a coffee cup. However, the invention may also be used for other types of capsules.

A known type of device for preparing and dispensing coffee using capsules, typically for home use, comprises a single housing which can be positioned on the worktop in which a hot water device and a preparing and dispensing unit are provided. The known device usually comprises an insertion mechanism for introducing a capsule and a water tank for making water available which is heated by a heating device of the hot water device and subsequently used for preparing a hot drink.

A drawback of the known device is that it is positioned on a worktop as a unit in a single housing, i.e. hot water device and preparing and dispensing unit, plus a water tank. This takes up a relatively large amount of space on the worktop. An additional drawback is that waste water and dirt can accumulate between the worktop and the bottom side of the housing, which is generally undesirable. Furthermore, a power cable has to be guided across the worktop to a socket.

A further drawback of the known device is that it is provided with a separate water tank which has to be filled with cold water in order to make water available for preparing a hot drink. This cold water is heated by means of the heating device and subsequently passed through a capsule in order to prepare the hot drink. In order to be able to prepare larger numbers of hot drinks, it is desirable to have a significant amount of water available, resulting in a water tank of significant dimensions positioned on the worktop.

In addition, it is desirable to use fresh water when preparing the hot drink. In practice, this means that water which is already present in the water tank is discarded and replaced by fresh water in order to prepare the hot drink using fresh water. Consequently, this results in a waste of tap water.

Another further drawback of the known device is that the used capsules are collected in the housing of the dispensing device, in which case space has to be available for accommodating the used capsules. On the one hand, it is desirable to accommodate as many capsules as possible in the housing of the dispensing device. To this end, a collecting tray is usually provided, in which these used capsules are collected. On the other hand, it is desirable to provide limited space for the used capsules, since this space leads to a further enlargement of the housing of the dispensing device.

An additional drawback of collecting the capsules is that these may give off an unpleasant odour, when they are left for a longer period in the collecting tray. The collecting chamber is usually open at the top, so that the air from the capsules can spread freely. Finally, it should be noted that the used capsules still contain an amount of liquid which collects at the bottom of the collecting tray or flows through apertures provided in the bottom of the collecting tray to a liquid receptacle which is situated at a lower level. In both cases, an amount of waste liquid is present in the housing which has to be discharged on a regular basis. In this case, it is then also desirable that the collecting tray be cleaned.

It is an object of the invention to provide a dispensing device for dispensing a hot drink using a capsule, wherein the dispensing device occupies a small space on the worktop, or at least to provide an improved dispensing device for preparing and dispensing a hot drink which functions on the basis of capsules.

The object is achieved by a dispensing device for dispensing a hot drink as claimed in claim 1.

The dispensing device comprises a preparing and dispensing unit that may be mounted on or in an opening, in particular on or in an opening in a worktop, wherein the hot water channel which passes the hot water from the hot water device to the capsule chamber leads through the opening after mounting. This means that, during mounting, the hot water device is positioned on a side of the opening, for example the bottom side of a worktop, while at least the capsule chamber and the dispensing opening of the dispensing and preparing unit are positioned on the other side of the opening, for example the top side of the opening.

As a result thereof, a significant part of the dispensing device is positioned on the other side of the opening. In the case of placement on a worktop, less space is thus required on the top side in order to enable the preparation and dispensing of a hot drink. There is usually sufficient space on the bottom side of the worktop to position a hot water device. The hot water device may, for example, be provided in a sink cupboard of a kitchen unit, wherein the preparing and dispensing unit can be positioned in an opening next to the kitchen sink.

The opening is in particular an installation opening for fastening the preparing and dispensing unit to a plate, for example a worktop, in which the installation opening is provided. The advantage of this dispensing device is that the opening is not only used for mounting the preparing and dispensing unit, but also for passing hot water from one side of the opening to the other side of the opening through the hot water channel.

The opening is preferably circular, but may also have any other suitable shape.

By means of the mounting device, the preparing and dispensing unit can be mounted at a fixed position with respect to the worktop. Such a fixed mounting position makes it possible to install the preparing and dispensing unit on the worktop subsequently, for example by means of a preferably elastic sealing element, such as an elastic sealing ring. As a result thereof, the amount of dirt and/or water which collects between the preparing and dispensing unit and the worktop is reduced significantly or even prevented.

In an embodiment, the mounting device comprises a mounting bush which can be placed through the opening and which extends on a bottom side of the preparing and dispensing unit, and which can be fastened on the other side of the opening by means of a fastening element, wherein the hot water channel leads through the mounting bush. The mounting device advantageously comprises a mounting bush which can be fitted through the opening. The mounting bush preferably comprises a substantially cylindrical shape and has a length which is greater than the thickness of the plate in which the opening is provided.

In an embodiment, the mounting bush is provided with screw thread on an outer side, wherein the fastening element comprises a fastening nut which can be screwed onto the screw thread. By screwing the fastening nut onto the mounting bush on the side of the opening which faces away from the dispensing opening, wherein the mounting bush has been fitted on the other side of the opening through the opening, the preparing and dispensing unit can be clamped in the opening. If desired, the fastening nut may be fixed by means of a securing arrangement, such as a number of screws.

In an embodiment, the part of the preparing and dispensing unit which extends above the opening after mounting, in particular above the worktop, is pillar-shaped, for example cylindrical, wherein the dispensing opening is provided in a part which projects from the pillar shape. The pillar-shaped part may have any desired cross section, such as circular, square, oval, etc.

In an embodiment, the preparing and dispensing unit comprises a tap part and a closure part which is movable with respect to the tap part, wherein the tap part and the closure part define a capsule chamber, wherein the closure part is movable with respect to the tap part between at least a closed position, in which the capsule chamber formed by the tap part and the closure part is closed for preparing the hot drink, and an open position, in which a capsule can be placed in the capsule chamber and can be removed after use.

In an embodiment, the capsule chamber is formed by the capsule holder and a press plate. In this case, the capsule holder is, for example, a component of the closure part and the press plate is a component of the tap part.

By providing a closure part which is movable with respect to the tap part, the closure part can be placed in an open position and a closed position with respect to the tap part. In the open position, a capsule can be placed in the capsule chamber. Then, the closure part can be moved from the open position to the closed position such that a capsule placed between the tap part and closure part is enclosed, preferably in a sealed manner, in the capsule chamber. Subsequently, the hot water can be passed through the capsule which is situated in the capsule chamber in order to prepare a hot drink.

In an embodiment, the closure part is hingeably fitted with respect to the tap part, wherein the preparing and dispensing unit has a locking device which is configured to, in the closed position, lock the closure part with respect to the tap part.

The closure part may be hingeable with respect to the tap part in order to move the closure part with respect to the tap part between the open position and the closed position. In order to ensure, in the closed position, that the closure part remains in the closed position, even with the relatively high pressure in the capsule chamber which may occur when preparing a hot drink, a locking device may be provided which locks the tap part and the closure part in the closed position with respect to each other. The locking device may, for example, be configured as a mechanical closure which can be moved between a free position and a locked position. In the free position, the tap part and the closure part are able to move with respect to each other, while in the locked position the locking device prevents a movement of the closure part with respect to the tap part.

In an embodiment, the tap part is fixedly connected to the mounting device, wherein the closure part is movably fitted to the tap part. The tap part may, for example, be formed by a fixed housing of the preparing and dispensing device, wherein the closure part is a cover element which is movable with respect to the fixed housing. In a further embodiment, this cover element may be fitted so as to be hingeable about a horizontal axis. In such an embodiment, the cover element may be elongate, wherein an end of the cover element is hingedly connected to the fixed housing. If such a cover element is placed in the open position with respect to the housing, a capsule may be inserted into the capsule chamber through the opening which is created between the fixed housing and the cover element.

In an embodiment, the dispensing device, in particular the preparing and dispensing unit, comprises a capsule discharge channel for discharging the capsule after the hot drink has been prepared, wherein the dispensing device is configured such that the capsule discharge channel leads through the opening after mounting. By providing a capsule discharge channel which leads through the opening, a used capsule, i.e. a capsule which has been used in the capsule chamber for preparing a hot drink, may be discharged through the opening. If the mounting device comprises a mounting bush, the capsule discharge channel may, for example, run through a mounting bush of the mounting device.

This makes it possible to take the capsule from above a worktop to a space underneath the worktop. Here, a capsule collecting device, such as a collecting tray or bag may be fitted in which the capsules are collected. This has the advantage that no space is required above the worktop for collecting the used capsules and that a relatively large space can be made available underneath the worktop for collecting capsules.

It should be noted that a capsule discharge channel which leads through an opening, in particular an opening in a worktop, may also be used in dispensing devices, in which the preparing and dispensing unit is not configured to be fitted in this opening and/or in which the hot water channel of the preparing and dispensing unit does not lead through this opening after mounting. Thus, it is also possible to advantageously use a capsule discharge channel in a dispensing device according to the preamble of claim 1, but without the characterizing part of claim 1.

Such a dispensing device for dispensing a hot drink, comprises
a hot water device for providing hot water;
a preparing and dispensing unit designed for preparing and dispensing the hot drink, comprising:
   a capsule holder for holding a capsule in a capsule chamber,
   a dispensing opening for dispensing a hot drink, and
   a dispensing channel for passing a hot drink from the capsule chamber to the dispensing opening, and
   a hot water channel for passing hot water from the hot water device to the capsule chamber, wherein the dispensing device, in particular the preparing and dispensing unit, comprises a capsule discharge channel for discharging the capsule after the hot drink has been prepared, wherein the capsule discharge channel is configured to lead through an opening provided in a worktop, i.e. configured to be fitted so as to lead through an opening provided in a worktop.

The capsule discharge channel comprises for example a, preferably flexible, tubular element for discharging the used capsules. The dispensing device may furthermore comprise a capsule collecting device, such as a collecting tray or bag, in order to collect the capsules discharged via the opening/the tubular element.

In an embodiment of a dispensing device with a tap part and a closure part which is movable with respect to the tap part, it is possible, when transferring the closure part from the closed position to the open position, to connect the capsule discharge channel to the capsule chamber such that a capsule present in the capsule chamber is discharged via the capsule discharge channel. To this end, an ejector mechanism may be provided by means of which the capsule is ejected from the capsule chamber in order to be discharged via the capsule discharge channel.

Preferably, the capsule drops down through the capsule discharge channel on account of gravity. The capsule discharge channel may, for example, comprise a flexible tubular element through which the capsule can drop down.

In an embodiment, a tilting device is provided in the capsule discharge channel for tilting the capsule from a first orientation to a second orientation, wherein the second orientation is most suitable for passing the capsule through the downstream capsule discharge channel.

The capsule discharge channel may be used, in particular, for discharging coffee cups. These coffee cups often have a greater length than diameter, as a result of which the diameter of the capsule discharge channel can be smallest if the longitudinal line of symmetry of the coffee cups is parallel to the longitudinal axis of the capsule discharge channel. In the case of a known coffee cup, the longitudinal axis of symmetry of the coffee cup in the second orientation is thus parallel to the longitudinal axis of the capsule discharge channel downstream of the tilting device.

However, it may be desirable for the capsule not yet to be in this second orientation in the capsule chamber, but in another first orientation, for example a substantially horizontal orientation of a longitudinal line of symmetry of the coffee cup in order to make it possible for liquid to flow through the capsule in this direction.

The abovementioned tilting device may then be provided in order to allow the capsule to move through the capsule discharge channel in the desired second orientation.

In order to bring about tilting of a coffee cup, the tilting device may be provided with a tilting edge or pin which is configured and placed to tilt the capsule from the first, for example horizontal, orientation to the second, for example vertical, orientation. In particular, the tilting edge may be configured to catch the peripheral flange of a coffee cup, such that the coffee cup is tilted through the contact between the tilting edge and the peripheral flange.

In an embodiment, the capsule discharge channel comprises a flexible tubular element which is configured for attaching a collecting bag to a discharge end of the flexible tubular element to collect several capsules discharged via the discharge channel. The capsule discharge channel is used to discharge capsules to a location at the other side of the opening, for example to the bottom side of the worktop. There, a relatively large receptacle for receiving the capsules may be provided. The receptacle may, for example, be a collecting tray or collecting bag and may advantageously be attached to the flexible tubular element of the capsule discharge channel. Optionally, a collecting bag may be placed in a bin intended for the purpose. The collecting bag may be a bag which is provided for recycling the capsules, in particular coffee cups. For example, the discharge end of the capsule discharge channel may be designed for attaching a collecting bag which is provided by a coffee cup supplier in order to collect coffee cups for recycling.

A further advantage of a collecting bag is that it can easily be attached to the capsule discharge channel in a substantially airtight and liquid-tight manner, so that no unpleasant odor or liquid can leak from the connection between the capsule discharge channel and the collecting bag. Such a substantially airtight and liquid-tight connection can incidentally also be produced between the capsule discharge channel and a collecting tray or other receptacle for capsules.

In an embodiment, the hot water device comprises a cold water inlet for connecting a cold water supply, and a heating device for heating water. Advantageously, the dispensing device is connected directly to a cold water supply, as this always ensures the immediate availability of fresh water. As a result, it is no longer necessary to regularly fill a water tank and neither is any more water wasted as a result of water which has been in the water tank for some time being poured away.

If the hot water device is placed on the bottom side of the worktop, for example in or near a kitchen sink cabinet, a cold water supply is usually present and the hot water device can thus easily be connected to a cold water supply.

The hot water device furthermore comprises a heating device for heating the cold water from the cold water supply to a temperature suitable for preparing a hot drink.

When preparing a hot drink, the hot water from the hot water device will flow to the capsule chamber via a hot water channel. If the dispensing device has already been used previously for preparing a hot drink, there may still be an amount of water in the hot water channel which has cooled down.

The heating device is thus preferably placed close to the preparing and dispensing unit, so that the length of the hot water channel from the hot water device to the capsule chamber is small. As a result thereof, an amount of cooled-down water in the hot water channel between the heating device and the capsule chamber has less of an effect on the preparation of the hot drink. Alternatively, it is also possible to provide a feature which makes it possible for the hot water channel to empty after a hot drink has been prepared.

In a preferred embodiment, the hot water device is fitted in a housing which can be attached to the mounting device, in particular to the end of the mounting bush facing away from the capsule chamber. For example, the housing in which the hot water device is accommodated may comprise a mounting ring which is configured to be secured to the mounting bush by means of fastening elements, for example fastening nuts, for example after the preparing and dispensing unit has been fitted in the opening.

The heating device may be designed as any suitable type of heating device and is, for example, designed as an instantaneous water heater which heats the water to a temperature suitable for preparing a hot drink while the water flows through the instantaneous water heater.

In an embodiment, the hot water device comprises a pump for increasing the pressure of the hot water. By means of a pump, the pressure of the water can be increased to a pressure which is suitable for preparing the hot drink. For coffee cups, the pump may be configured to produce the pressure of 18-20 bar desired for coffee cups. In this case or alternatively, the hot water device may comprise a non-return valve and/or a controllable shut-off valve for allowing water from the cold water supply to pass through. If no separate pump is provided, the water may also be pumped to the dispensing device by means of the water pressure from the cold water supply.

In an embodiment, the hot water device comprises a flow sensor for measuring the amount of hot water to be dispensed. By means of a flow sensor, it is possible to determine whether the amount of water desired for the hot drink is being dispensed.

In an embodiment, the hot water device comprises a regulator valve which is situated upstream of the pump and is configured to reduce the pressure of the water supplied to the hot water device to a reduced pressure, for example almost to atmospheric pressure, wherein the reduced pressure preferably is approximately constant. The expression approximately constant pressure is understood to mean a pressure which has substantially fewer pressure variations than the water mains pressure.

By providing a regulator valve, it is possible to prevent the water from flowing through/leaking due to the water mains pressure even when dispensing of a hot drink is not desired. In this case, a regulator valve may be used to provide an approximately constant water pressure which is independent from the water mains pressure at the inlet of the water pump. As a result, the water pump does not have to be configured to provide a constant outlet pressure at different inlet pressures and it is possible to use a type of water pump which produces a fixed pressure increase of the water.

The dispensing device furthermore preferably comprises an electronic control unit, for example a control module, which is configured to actuate the shut-off valve and/or, if present, the pump, on the basis of an operating signal obtained from an operating device, such as an operating button, such that, when operating the operating device, the desired amount of water is dispensed at the desired pressure. In this case, it should be noted that the operating device may be provided with different operating options so as to be able to dispense different amounts of hot water and water of different temperatures, depending on the requirements.

The control unit may be configured to receive further operational data, for example a signal from the flow sensor to determine how much water has been dispensed during the preparation of the hot drink and a signal from a temperature sensor to determine if the heating device has been preheated sufficiently.

In an embodiment, the hot water device comprises a tank for keeping water at a temperature of at least 95 degrees, preferably at least 100 degrees Celsius, and a hot water outlet connected to the tank, wherein the hot water outlet is connected to the hot water channel.

Hot water devices which keep water at a high temperature above 95 degrees Celsius for dispensing hot or boiling water are known. These are used, for example, in kitchens for dispensing this hot or boiling water via a tap suitable for the purpose.

In order to cool the hot or boiling water down to a temperature suitable for preparing the hot drink, a cooling device may be provided.

In an embodiment, the cooling device comprises a heat exchanger which is configured to exchange heat between hot water originating from the hot water outlet and cold water which is flowing into the tank via the cold water inlet. By cooling the hot or boiling water using cold water which flows in to the hot water device, in particular the tank, via the cold water inlet, the energy which is released to cool down the water is used to heat up the cold water originating from the cold water supply which is subsequently heated to at least 95 degrees Celsius via the cold water inlet in the tank. As a result thereof, little or no energy is lost when cooling down the hot or boiling water to a temperature suitable for preparing the hot drink. Alternatively, it is also possible to mix the hot water originating from the hot water outlet with cold water by means of a mixing device in order to provide hot water at the desired temperature.

In an embodiment, the dispensing device furthermore comprises a hot or boiling water channel for passing hot or boiling water to a hot or boiling water dispensing opening, which is provided in the preparing and dispensing unit, wherein the dispensing device is configured such that, after the mounting device has been fitted in the opening, the hot or boiling water channel leads through the opening, wherein the hot water device comprises a second hot water outlet which is connected to the tank and to the hot or boiling water channel.

Installing a preparing and dispensing unit in combination with a heating device comprising a tank containing water of at least 95 degrees Celsius makes it possible to also provide a hot or boiling water dispensing opening on the preparing and dispensing unit which is connected to a second hot water outlet of the tank by means of a hot or boiling water channel. As a result, it is possible to dispense hot or boiling water from the preparing and dispensing unit via the hot or boiling water channel. The hot or boiling water channel preferably also leads through the mounting opening of the preparing and dispensing unit. The hot or boiling water may be used, for example, for preparing tea, but also for all kinds of other purposes.

Using this device, it is thus possible to provide water for both coffee and tea, wherein the water for the coffee has a temperature below 100 degrees Celsius in order to prevent the contents of the capsule from scalding, whereas the water for tea preferably has a temperature of 100 degrees Celsius.

In an alternative embodiment, the dispensing device is combined with a tank configured to hold water at temperatures above 95 degrees Celsius, but this water at a temperature above 95 degrees Celsius is not used for preparing a hot drink by means of a capsule, but rather for dispensing hot or boiling water from a hot or boiling water dispensing opening which is provided in the preparing and dispensing unit.

In such an embodiment, the dispensing device comprises a hot water device for holding and dispensing hot or boiling water, and a hot or boiling water channel for passing hot or boiling water from the hot water device to a hot or boiling water dispensing opening, which is provided in the preparing and dispensing unit, wherein the dispensing device is configured such that, after the mounting device has been fitted in the opening, the hot or boiling water channel passes through the opening. Also in this embodiment, the hot or boiling water channel preferably passes through the installation opening of the preparing and dispensing unit.

In an embodiment, the dispensing device may be provided with a steam device for providing steam, which is provided, for example, for foaming up milk. The steam device comprises a steam facility, a steam pipe and a steam channel which connects the steam facility and the steam pipe to each other. The steam pipe may extend from the preparing and dispensing unit. The steam facility will typically be provided on the opposite side of the opening, wherein the steam channel leads through the opening after mounting. The steam facility may be a component of the hot water device.

In an embodiment, the dispensing device comprises a water cooling device for providing cooled water, and a cooled water channel for passing cooled water from the water cooling device to a cooled water dispensing opening which is provided in the preparing and dispensing unit, wherein the dispensing device is configured such that, after mounting of the mounting device in the opening, the cooled water channel leads through the opening. In this embodiment, the dispensing device is configured for dispensing a hot drink, for example coffee, and dispensing cooled water. In this case, the dispensing device may also be configured for dispensing hot or boiled water.

In an embodiment, the dispensing opening for hot drinks is situated higher than at least part of the capsule chamber, for example above a quarter of the height, preferably halfway up the height of the capsule chamber up to the location of the top part of the capsule chamber. An outflow which is in a high position makes it possible to make the upper side of the preparing and dispensing unit completely flat, which may provide an aesthetic advantage. In addition, if the distance between worktop and dispensing opening remains the same, the height of the preparing and dispensing unit is restricted, because the capsule holder is not situated in a higher position than the outflow, contrary to customary practice. Thus, this outflow configuration may also result in a more compact preparing and dispensing unit.

Conversely, it is possible to increase the distance between dispensing opening and worktop while retaining the height of the preparing and dispensing unit by having an outflow in a relatively high position. This may be desirable, for example, in an embodiment provided with an outflow with two dispensing channels, which not only makes it possible to dispense a hot drink into, for example, a cup, but also to dispense hot or boiling water into, for example, a teapot. Having the outflow in a high position thus combines more possible uses for the preparing and dispensing unit with possible aesthetic advantages.

A possible drawback of a dispensing opening which is situated in a higher position than at least part of the capsule chamber is the fact that not all of the prepared hot drink will flow through the dispensing channel to the dispensing opening after the capsule chamber has been unlocked. Some of the prepared hot drink will flow back to the capsule chamber of the capsule holder. It is therefore desirable to make a volume of a portion of the dispensing channel which is situated under the dispensing opening small. In particular, it is advantageous if a, usually cylindrical, space which is provided on the side of the press plate facing away from the capsule chamber has a depth of at most 3 mm, preferably 0.5 to 2 mm, for example approximately 1 mm.

Further characterizing features and advantages of embodiments of the invention will be explained in more detail below by means of the description of a number of non-limiting exemplary embodiments with reference to the attached drawing, in which:
Figure 1 shows a side view of a first embodiment of a dispensing device for dispensing a hot drink;
Figure 2 shows a perspective view of the preparing and dispensing unit of the dispensing device from Figure 1;
Figure 3 shows a longitudinal section of the preparing and dispensing unit from Figure 2 in a closed position;
Figure 4 shows a longitudinal section of the preparing and dispensing unit from Figure 2 in an open position;
Figure 5 shows a cross section of the preparing and dispensing unit from Figure 2;
Figure 6 shows a longitudinal section of a part of the dispensing device from Figure 1;
Figure 7 shows a side view of a second embodiment of a dispensing device for dispensing a hot drink;
Figure 8 shows a longitudinal section of the preparing and dispensing unit of the dispensing device from Figure 7;
Figure 9 shows a cross section of the preparing and dispensing unit of the dispensing device from Figure 7;
Figure 10 shows a side view of a third embodiment of a dispensing device for dispensing a hot drink,
Figure 11 shows a side view of a fourth embodiment of a dispensing device for dispensing a hot drink;
Figure 12 shows a cross section of an alternative embodiment of a preparing and dispensing unit in a closed position, and
Figure 13 shows a cross section of the embodiment from Figure 12 in an open position.

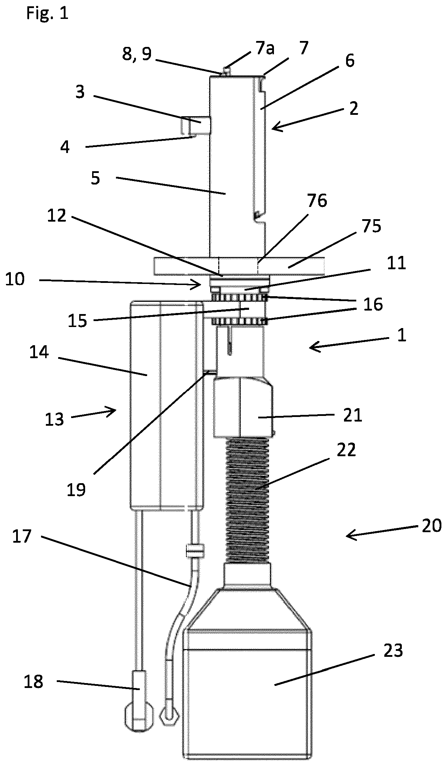

Figure 1 shows a side view of a first embodiment of a dispensing device for dispensing a hot drink, denoted overall by reference numeral 1. The dispensing device 1 comprises a preparing and dispensing unit 2 configured for preparing and dispensing the hot drink, for example coffee, in which use is made of capsules which can be placed in the preparing and dispensing unit. Such a capsule is filled with an ingredient by means of which a drink can be prepared in combination with water. The embodiment illustrated in the figures is particularly suitable for preparing drinks using coffee cups or coffee capsules having a frustoconical shape, such as those which are commercially available under the name "Nespresso".

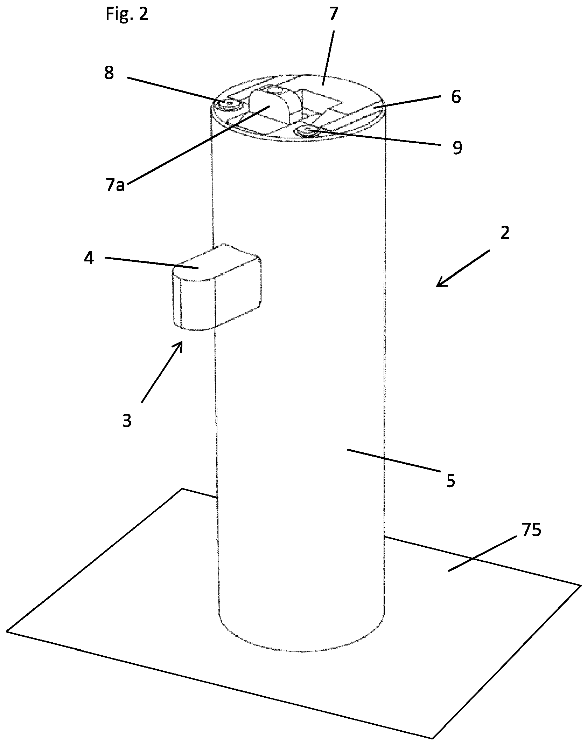

The preparing and dispensing unit 2 is configured to be fitted in an opening of a worktop 75 or the like. Figure 2 shows a perspective view of the portion of the preparing and dispensing unit 2 which protrudes from the worktop 75 after mounting.

Here, the preparing and dispensing unit 2 has a cylindrical main shape with an outflow 3 in which a dispensing opening 4 is provided for dispensing the hot drink, so that a glass, cup, mug or other drinks container can be placed under the dispensing opening 4.

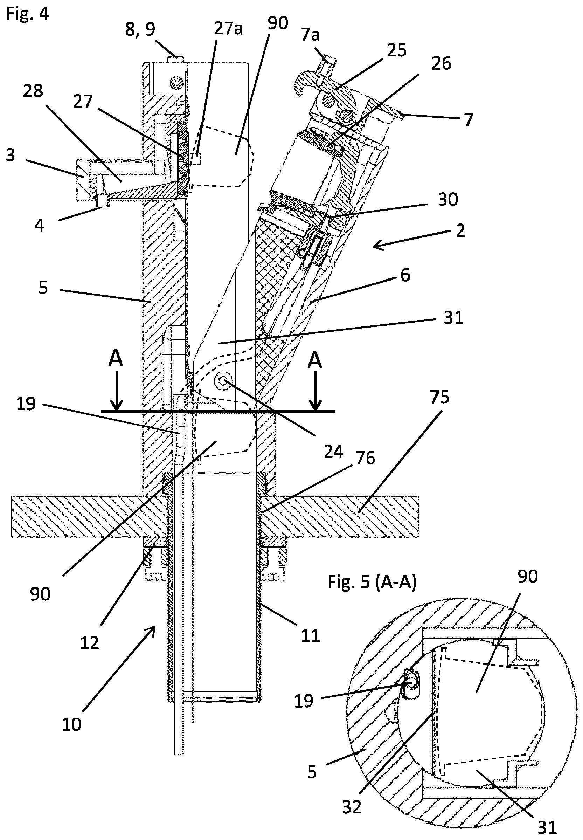

The cylindrical main shape of the preparing and dispensing unit 2 is formed by a tap part 5 and a closure part 6 of the preparing and dispensing unit 2, which are movable with respect to each other between a closed position, as illustrated in Figure 2, and an open position (Figure 4). In the open position, a capsule containing an ingredient, in particular a coffee cup, can be placed in the preparing and dispensing unit 2 in order to prepare a hot drink. In the open position, a used capsule can also be discharged from the preparing and dispensing unit 2.

The preparing and dispensing unit 2 comprises an unlocking lip 7 and an unlocking handle 7a for unlocking a locking device which is provided for locking the tap part 5 and the closure part 6 in the closed position.

The preparing and dispensing unit 2 furthermore comprises two operating buttons 8, 9 for operating the dispensing device 1. The first operating button 8 can be used to dispense a first amount of hot drink when pressed, while the second operating button 9 can be used to dispense a second amount of hot drink when pressed. In this case or alternatively, the operating buttons 8, 9 may also be used for other functions, for example for a cleaning cycle.

Again referring to Figure 1, the preparing and dispensing unit 2 comprises a mounting device 10 for mounting the preparing and dispensing unit 2 on the worktop. The mounting device 10 comprises a mounting bush 11 which is fitted through a round opening 76 provided in the worktop 75. The mounting bush 11 is cylindrical and provided with screw thread on its outer surface. An internally threaded fastening nut 12 is fitted on the mounting bush 11 in order to secure the preparing and dispensing unit 2 in the opening 76 in the worktop 75 in a clamping manner.

The dispensing device 1 comprises a hot water device 13 which is configured for providing a desired amount of hot water when one of the operating buttons 8, 9 is operated. The hot water device 13 is provided in a housing 14, for example made of plastic material. A fastening lug 15 with an opening is provided on the housing 14. Due to the opening, the fastening lug 15 can be placed over the mounting bush 11 and the fastening lug 15 can be fitted on the mounting bush 11 by means of the nuts 16.

The hot water device 13 is connected to a cold water supply 17 and may be provided with electricity via a power cable 18.

Via a hot water channel 19 which runs through the mounting bush 11 to the preparing and dispensing unit 2, the hot water provided by the hot water device 13 is passed to the preparing and dispensing unit 2 for preparing and dispensing a hot drink there.

In addition, a capsule collecting device 20 is arranged on the end of the mounting bush 11. The capsule collecting device 20 is configured to discharge and collect used capsules, i.e. after dispensing of a hot drink using the capsule. The capsule collecting device 20 comprises a tilting device 21, a capsule discharge tube 22 and a capsule collecting tray 23, which will be described in more detail below.

After mounting, only the preparing and dispensing unit 2 is situated above the worktop 75 and the hot water device 13 and the capsule collecting device 20 are arranged under the worktop 75, for example in a kitchen sink cabinet. This means that the hot water device 13 and the capsule collecting device 20 are usually arranged out of sight, including the connections to the cold water supply 17 and to electricity by means of the power cable 17. They therefore do not occupy any space on the worktop.

In this case, the hot water device 13 is fitted on the mounting bush 11 and is suspended therefrom. Thus, the hot water device 13 does not occupy any space on, for example, the floor of a kitchen sink cabinet.

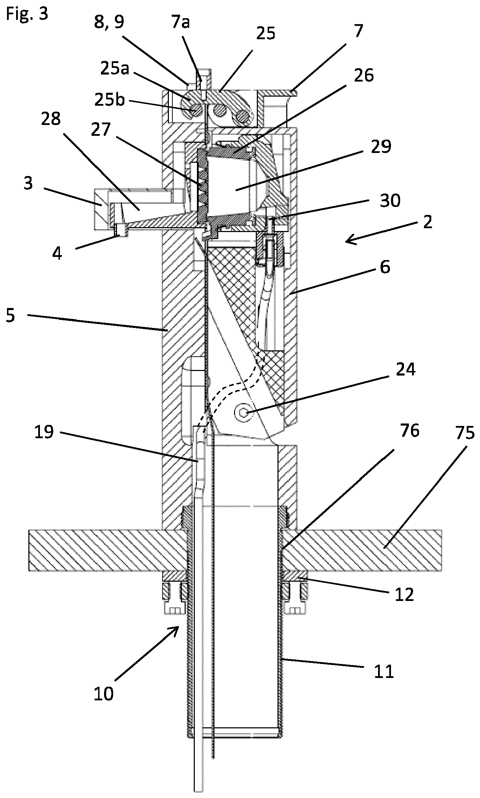

Figure 3 shows a cross section of the preparing and dispensing unit 2. The preparing and dispensing unit 2 comprises the tap part 5 and the closure part 6. The tap part 5 forms the main part of the preparing and dispensing unit 2 and is fixedly connected to the mounting bush 11. The closure part 6 is connected to the tap part 5 so as to be hingeable about a pivot pin 24 and thus tiltable with respect to this part between a closed position, as illustrated in Figure 3, and an open position, as illustrated in Figure 4.

A locking device 25 is provided for locking, in the closed position, the mutual position between the tap part 5 and the closure part 6. In Figure 3, the locking device 25 is illustrated in a locked position in which the closure part 6 cannot be tilted with respect to the tap part 5.

By means of successively tilting the unlocking lip 7 upwards, and moving the unlocking handle 7a backwards, i.e. in the direction of the unlocking lip 7, the locking device 25 can be brought to a free position, in which the locking hook 25a is tilted away with respect to the locking pin 25b. In this free position, the closure part 6 can be tilted backwards from the closed position to the open position. Optionally, a torsion spring or another resilient element may be provided which is pretensioned to move the closure part 6 to the open position.

The closure part 6 comprises a capsule holder 26 for holding a capsule. The tap part 5 comprises a press plate 27 with openings through which a prepared hot drink can flow to the dispensing opening 4 via a dispensing channel 28.

In the illustrated closed position of the closure part 6, the capsule holder 26 and the press plate 27 form a capsule chamber 29. On the end of the capsule chamber facing away from the press plate 27, an outlet opening 30 of the hot water channel 19 is provided, so that hot water which is supplied by the hot water channel 19 can flow to the dispensing opening 4 through a capsule placed in the capsule chamber 29 and via the openings in the press plate 27 and the dispensing channel 28.

The capsule holder 26 comprises two parts which are moveable with respect to each other in an axial direction, such that the part which is closest to the press plate 27 can be pressed tightly against the press plate by the hydraulic pressure of the water supplied for preparing a hot drink in order to achieve a watertight connection between the press plate 27 and the capsule holder 26 while preparing a hot drink. In this case, the wall of the capsule bearing against the press plate 27 is clamped between the press plate 27 and the movable part of capsule holder 26 in a sealing manner. A sealing may be provided between the two parts of the capsule holder 26 to prevent leaks between these two parts.

Figure 4 shows the tap part 5 and the closure part 6 in the open position. In this open position, there is a space at the top side of the preparing and dispensing unit 2, between the tap part 5 and the closure part 6, in which a capsule 90 can be positioned. An insertion mechanism is provided to guide a capsule 90 to and keep the capsule 90 in an introduction position, such that, when the closure part 6 is moved to the closed position, the capsule is received in the capsule holder 26. To this end, the insertion mechanism comprises, for example, a number of guides for guiding the capsule to the introduction position, and two lugs 27a for catching the capsule.

When the capsule 90 has been arranged in the introduction position, as illustrated at the top of Figure 4, the closure part 6 can be tilted to the closed position, so that the capsule is received in the capsule chamber 29 delimited by the press plate 27 and capsule holder 26. In this case, the capsule 90 is pushed past the lugs 27a, so that the capsule 90 can descend freely when the closure part 6 is opened again, as is illustrated in the cross section A-A in Figure 4 and in Figure 5.

During the closing movement of the closure part 6 into the closed position, a number of perforation openings are made in that wall of the capsule facing away from the press plate 27, for example by means of perforating the wall with perforating pins, so that hot water supplied through the hot water channel 19 can flow into the capsule via these perforation openings. It should be noted that perforations are also made in that wall of the capsule placed on the press plate 27 by protrusions arranged on the press plate in order to allow a hot drink to flow through. These perforations may be produced while the closure part 6 is being moved into the closed position, but may also be produced by the pressure which is exerted on this wall during the preparation of the drink.

In order to move the closure part 6 to the closed position, the locking device 25 can be brought into and held in the free position by tilting the unlocking lip 7 upwards and moving the unlocking handle 7a backwards, i.e. in the direction of the unlocking lip 7, so that the locking hook 25a can be moved over the locking pin 25b.

When the closure part 6 is in the closed position, the locking hook 25a can be brought around the locking pin 25b by subsequently pushing the unlocking handle 7a downwards, i.e. away from the unlocking lip 7. Then, the locking hook 25a can be locked around the locking pin 25b by tilting the unlocking lip 7 downwards, so that the locking device 25 comes to lie in the locked position, as illustrated in Figure 3.

It should be noted that any other suitable locking device may also be used for locking the mutual position of the tap part 5 and the closure part 6 in the closed position.

If the closure part 6, after a hot drink has been dispensed using a capsule 90 placed in the capsule chamber 29, is moved into the open position again, a capsule discharge channel 31 will be produced, by means of which the capsule 90 can be discharged via the mounting bush 11.

An ejection or pulling mechanism may be provided for pulling the capsule 90 out of the capsule holder 26 when the closure part 6 is being tilted into the open position, so that it can descend via the capsule discharge channel 31. This ejection or pulling mechanism may, for example, comprise one or more hook elements or edges of the insertion mechanism, behind which the capsule 90 is caught.

In the preparing and dispensing unit 2, the capsule discharge channel 31 is at first delimited by the tap part 5 and the closure part 6 and subsequently the capsule discharge channel 31 leads through the mounting bush 11 in the direction of the capsule collecting device 20.

The capsules are consequently discharged after use via the mounting bush 11, and thus via the opening 76 of the worktop 75, in which the mounting bush 11 is placed, and finally end up in the capsule collecting tray 23.

It should be noted that, in the illustrated embodiment, the size of the preparing and dispensing unit is additionally limited by the fact that the space occupied by the closure part in the closed position produces a part of the capsule discharge channel 31 in the open position by tilting the closure part. The space inside the preparing and dispensing unit between the capsule chamber 29 and the mounting device 10 is thus partly used twice.

The capsule collecting tray 23 (Figure 1) may comprise a relatively large volume, so that a large number of used capsules can be collected before it has to be emptied. The capsule collecting device 20 preferably comprises a collecting bag which can be placed in the capsule collecting tray 23. The collecting tray or the collecting bag placed therein may be connected to the flexible tube element 22 in an airtight manner, so that the odor of the used capsules stays inside the capsule collecting device 20. The capsule collecting tray 23 or the collecting bag placed therein may be specially designed for recycling the coffee cups.

Figure 5 shows a cross section of the preparing and dispensing unit 2, at the location of the line A-A in Figure 4. In Figure 5, a capsule 90 is illustrated which descends via the capsule discharge channel 31. The location of the hot water channel 19 can also be seen. Both the capsule discharge channel 31 and hot water channel 19 are within the periphery of the mounting bush 11. A division plate 32 is arranged in the mounting bush 11 for guiding the capsule 90 in the capsule discharge channel 31.

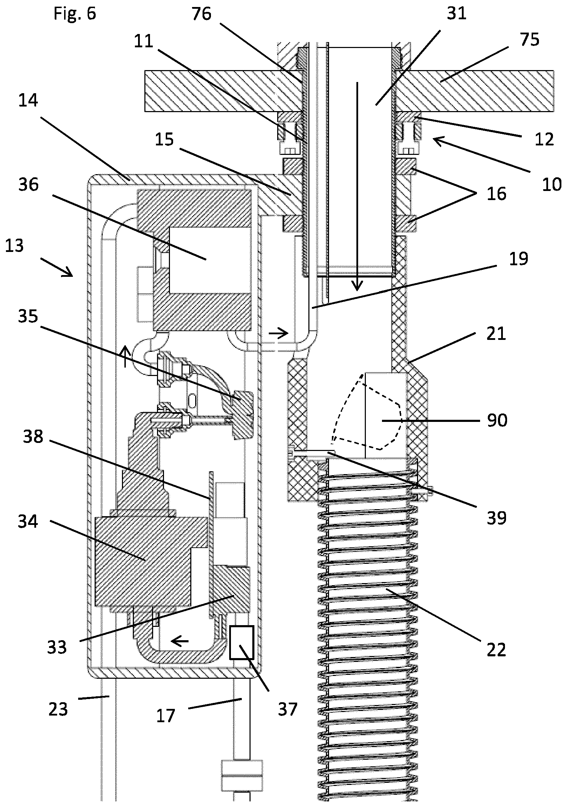

Figure 6 shows a longitudinal section of the hot water device 13, the mounting bush 11 and the top part of the capsule collecting device 20.

The hot water device 13 comprises, accommodated in the housing 14, a flow sensor 33, a water pump 34, a pressure relief valve 35, a heating device 36 and a regulator valve 37. A control module 38 is provided for actuating the dispensing device 1.

The operating buttons 8,9 are connected to the control module 38 by means of wiring (not shown). The wiring runs through the preparing and dispensing unit 2, in particular through the mounting bush 11.

When one of the operating buttons 8,9 is pushed to prepare a hot drink, the control module 38 will actuate the water pump 34 to pump water across until the flow sensor 33 has measured that the desired amount of water has been pumped across. The water to be pumped across is supplied by the cold water supply 17.

The cold water which flows into the hot water device 13 from the cold water supply 17 will first flow through a regulator valve 37 in order to reduce the pressure of the water significantly, for example to almost atmospheric pressure. This may possibly prevent the water from continuing to flow/leak as a result of the water mains pressure via the non-activated pump 34 even if it is not desired to dispense a hot drink. In this case, a regulator valve 37 may be used to ensure that the water pressure at the inlet of the water pump 34 is approximately constant and independent from the water mains pressure. As a result, the water pump 34 does not have to be configured to provide a constant outlet pressure at different inlet pressures and a type of water pump 34 can be used which achieves a fixed pressure increase of the water.

Optionally, it is also possible to provide a shut-off valve in addition to a regulator valve 37. The control module 38 will also actuate the heating device 36 in order to heat the water pumped through the heating device 36 to the desired temperature. The heating device 36 is an instantaneous water heater which heats the water to the desired temperature while it flows through the heating device 36. When preparing a hot drink, fresh water from the cold water supply 17 is thus always used.

The water pump 34 is configured to generate a water pressure which is desired for preparing the hot drink.

A water pump 34 and a heating device 36 for preparing a hot drink are known per se. By pumping and heating the water, the desired amount of hot water will be dispensed by the hot water device 13 in the hot water channel 19, via which it flows to the capsule chamber 29 for preparing a hot drink using the desired amount of hot water and at the desired temperature. By arranging the heating device 36 close to the opening, the amount of water which remains behind in the hot water channel 19 after preparing a hot drink is limited. To this end, it is advantageous that the housing 14 is fitted closely below the worktop 75.

It should be noted that it is also possible to provide a hot water tank with a heater and a temperature-control device to supply an amount of hot water instead of an instantaneous water heater.

The tilting device 21 is provided at the end of the mounting bush 11. This tilting device 21 is fitted to tilt the capsule 90 which descends inside the capsule discharge channel 31 from a first orientation to a second orientation. In the first orientation, the longitudinal axis of the capsule 90 is substantially horizontal, as is illustrated in Figure 4. However, in this first orientation, the capsule 90 takes up a relatively large amount of space in the width direction. In order to keep the diameter of the capsule discharge tube 22 as small as possible, it is desirable to tilt the capsule 90 to a second orientation, in which the longitudinal axis of the capsule 90 is substantially vertical.

In order to achieve the tilt from the first orientation to the second orientation, a tilting edge 39 is provided in the tilting device 21. When the capsule 90 enters the tilting device 21 from the capsule discharge channel, one side, in particular the flange side of the capsule 90, will end up on the tilting edge 39. And as a result thereof, the capsule 90 will tilt from the first to the second orientation. In this second orientation, the capsule 90 will move along inside the capsule discharge tube 22 towards the capsule collecting tray 23.

In an alternative embodiment, the capsule may also move through a capsule discharge tube in any other desired orientation and the provision of a tilting device 21 is not required.

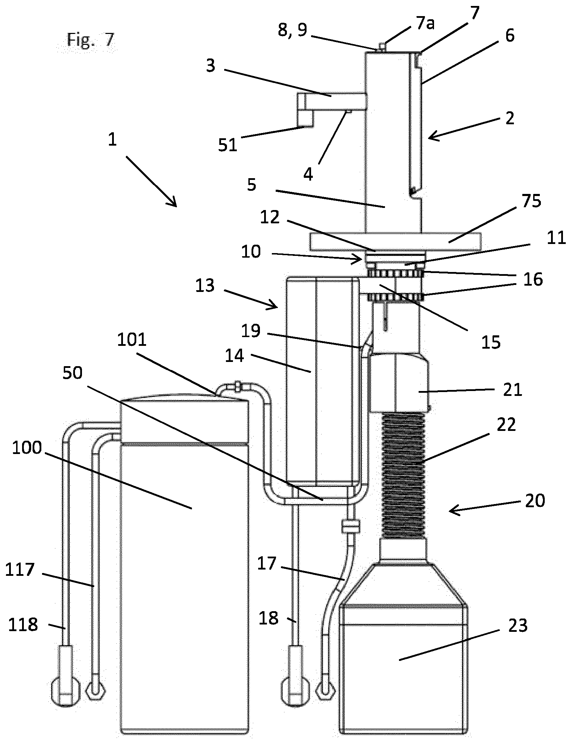

Figures 7-9 show a second embodiment of the dispensing device 1. In this embodiment, the dispensing device 1 is not only suitable for dispensing a hot drink, but also for dispensing hot or boiling water, i.e. water hotter than 95 degrees Celsius.

As can be seen in Figure 7, this dispensing device 1 comprises a hot water tank 100 for holding and dispensing hot water. This hot water may, at increased pressure, have a temperature of more than 100 degrees Celsius, so that, when the pressure is reduced, in particular when dispensing the hot water at atmospheric pressure, boiling water is produced.

The hot water tank 100 comprises an inlet which is connected to a cold water supply 117. The hot water tank 100 furthermore comprises a power cable 118 for providing electricity to the hot water tank 100. The electricity is used, inter alia, for a heating device which is configured to heat the water in the hot water tank 100 to the desired temperature of at least 95 degrees Celsius, in particular to a temperature of more than 100 degrees Celsius.

The hot water tank 100 is furthermore provided with a temperature-control device, for example a thermostatic controller for keeping the hot water at the desired temperature.

Such a hot water tank 100 is known per se and disclosed, for example, in EP0467480. The hot water tank 100 comprises a hot water outlet 101 for hot or boiling water. A hot or boiling water channel 50 is connected to this hot water outlet 101 and leads through the mounting bush 11 and the tap part 5 of the preparing and dispensing unit 2 to a dispensing opening 51 for hot or boiling water in order to dispense the hot or boiling water there.

The dispensing opening 51 is provided in the outflow 3 which also contains the dispensing opening 4 for a hot drink. The hot or boiling water thus flows through a different channel, namely the hot or boiling water channel 50, from the hot water channel 19 which is used for passing hot water to the capsule chamber 29. This ensures that clean water can be dispensed at dispensing opening 51, as it does not pass through the lines and spaces for preparing the hot drink.

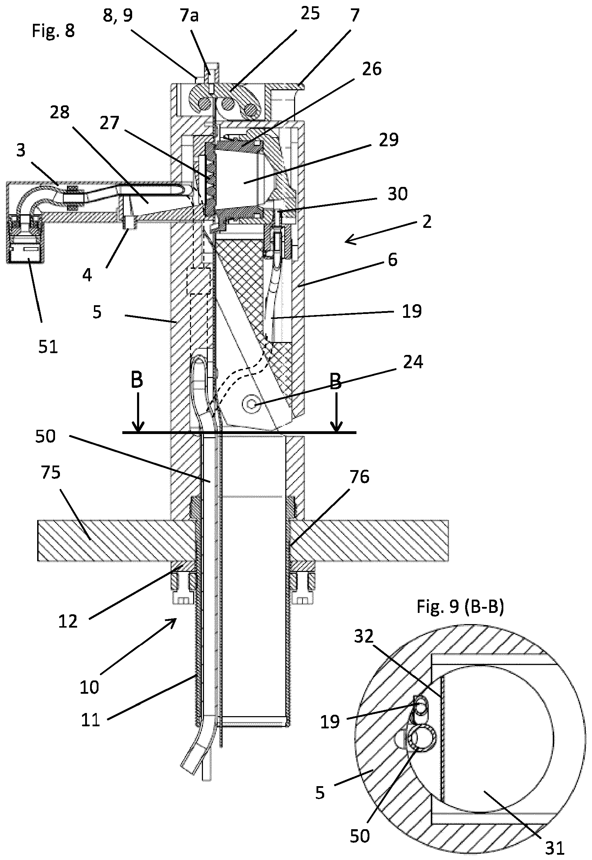

Figures 8 and 9 illustrate how the hot or boiling water channel 50 runs through the preparing and dispensing unit 2, from the start of the mounting bush 11 up to the dispensing opening 51 in the outflow 3. The hot or boiling water channel 50 runs upwards through the tap part 5 and directly to outflow 3, whereas the hot water channel runs towards the capsule chamber 29 via the closure part 6.

The preparing and dispensing unit 2, the hot water device 13 and the capsule collecting device 20 are furthermore designed in accordance with the first embodiment described in Figures 1-6 and will therefore not be discussed any further.

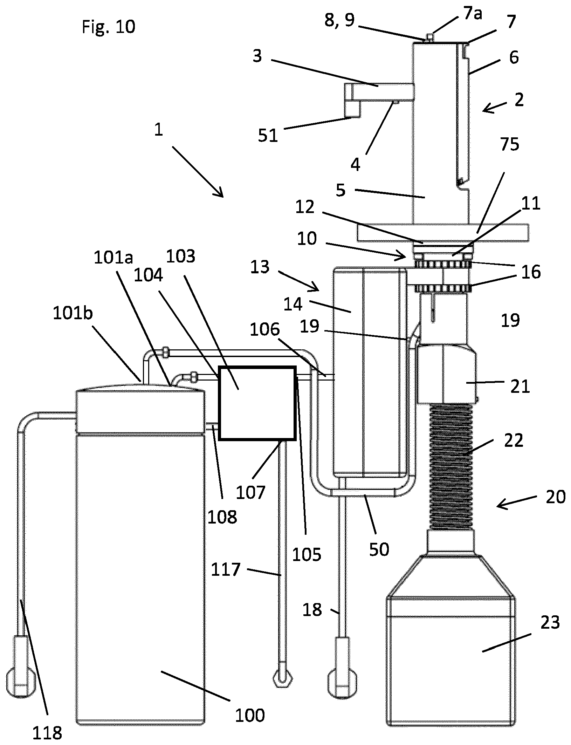

Figure 10 illustrates a third embodiment of a dispensing device 1. In this embodiment of the dispensing device 1, a hot water tank 100 is provided for providing hot or boiling water, similar to the dispensing device 1 of Figures 7-9. The hot water tank 100 in this embodiment comprises a first hot water outlet 101a and a second hot water outlet 101b. The second hot water outlet 101b is connected to the hot or boiling water channel 50 via which hot or boiling water can be dispensed through the dispensing opening 51 for dispensing hot or boiling water which is arranged in the outflow 3.

In addition, the hot or boiling water is also used for preparing a hot drink. Because the temperature of the water in the hot water tank 100 is too high for preparing a hot drink, such as coffee, a cooling device is provided in the form of a heat exchanger 103 to cool down the hot or boiling water to a temperature suitable for preparing the hot drink.

A first inlet 104 of the heat exchanger 103 is connected to the first hot water outlet 101a for hot or boiling water of the hot water tank 100. An outlet 105 of the heat exchanger 103 which is in liquid communication with the first inlet 104 runs to the housing 14 via line 106. A second inlet 107 of the heat exchanger 103 is connected to the cold water supply 117. And an outlet 108 of the heat exchanger 103 which is in liquid communication with the second inlet 107 is connected to an inlet of the hot water tank 100.

Thus, by using the heat exchanger 103, the water flowing through the heat exchanger 103 to the hot water device 13 is cooled down by means of cold water from the cold water supply 117 to a temperature which is suitable for preparing a hot drink, in particular coffee. The cold water from the cold water supply 117 flows towards the hot water tank 100 via the heat exchanger 103. In this case, the relatively cold water which flows into the hot water tank 100 thus absorbs the heat which has been given off by the cooled hot water originating from the first hot water outlet 101a, so that little or no thermal energy is lost when cooling the hot water.

The housing 14 contains a flow sensor, a water pump and a pressure relief valve. Since hot water is supplied directly to the housing 14, a heating device is superfluous, compared to the dispensing device from Figures 1-6.

It should be noted that when the pressure in the water conduit 117 is sufficient for preparing a hot drink, no water pump has to be provided in the housing 14. However, when preparing a hot drink using capsules, a higher water pressure than the pressure of the water conduit 117 is often desired and therefore a water pump is advantageously provided in the housing 14 in the illustrated embodiment.

Similar to the dispensing device 1 from Figures 1-6, the housing 14 furthermore comprises a control module 38 for actuating the dispensing device 1.

The water in the housing 14 supplied from the hot water tank 100 via the heat exchanger 103 is pumped to the preparing and dispensing device 2 via the hot water channel 19 to prepare a hot drink in accordance with the embodiments from Figures 1-6 and Figures 7-9.

As an alternative to the heat exchanger 103, it is also possible to mix, in a mixing device, the hot water originating from the first hot water outlet 101a with cold water, for example from the cold water supply, to provide hot water of the desired temperature to the hot water channel 19. In this variant, again little or no energy is lost when cooling down the hot water, because mixing in cold water results in more hot water than is withdrawn from the hot water tank.

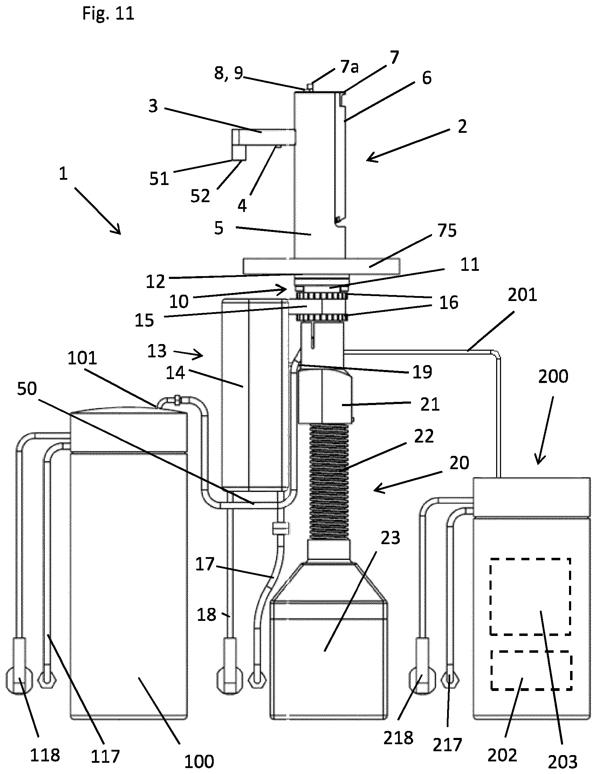

Figure 11 shows a fourth embodiment of a dispensing device 1. This dispensing device 1 comprises a device for preparing a hot drink and a hot water tank 100 which is connected to the preparing and dispensing unit 2. This part of the device is virtually identical to the device as illustrated in Figure 7.

In this case, the dispensing device 1 from Figure 11 comprises a water cooling device 200 for providing cooled water. The water cooling device 200 is connected to the preparing and dispensing unit 2 via a cooled water line 201. A cooled water line is provided in the preparing and dispensing unit 2 to pass the cooled water to a cooled water dispensing opening 52 which is provided in the outflow 3. This cooled water line may approximately follow the hot or boiling water channel 50 through the preparing and dispensing unit (see Figure 8). The cooled water line 201 and the cooled water line provided in the preparing and dispensing unit 2 together form a cooled water channel which passes cooled water from the water cooling device 200 to the cooled water dispensing opening 52.

In the illustrated dispensing device 1, the dispensing opening 51 for hot or boiling water and the cooled water dispensing opening 52 are combined in a jet aerator having two, for example concentric, outlet openings. In an alternative embodiment, it is also possible to provide two separate jet aerators. In another embodiment, a line in the preparing and dispensing unit 2 can be used both for dispensing hot or boiling water and dispensing cooled water via a single dispensing opening.

The cooled water channel runs through the mounting bush 11 of the preparing and dispensing unit 2 and thus through the opening in the worktop 75 in which or on which the preparing and dispensing unit 2 is fitted.

The water cooling device 200 is connected to a cold water supply 217 and may be provided with electricity via a power cable 218. The water cooling device 200 comprises a cooling device 202 configured to cool the water and a filtering device 203 configured to filter the water.

It should be noted that, in an alternative embodiment, the water cooling device 200 may be provided in a device without a hot water tank, as is illustrated in Figure 2, so that the dispensing device 1 is suitable for preparing and dispensing a hot drink and dispensing cooled water.

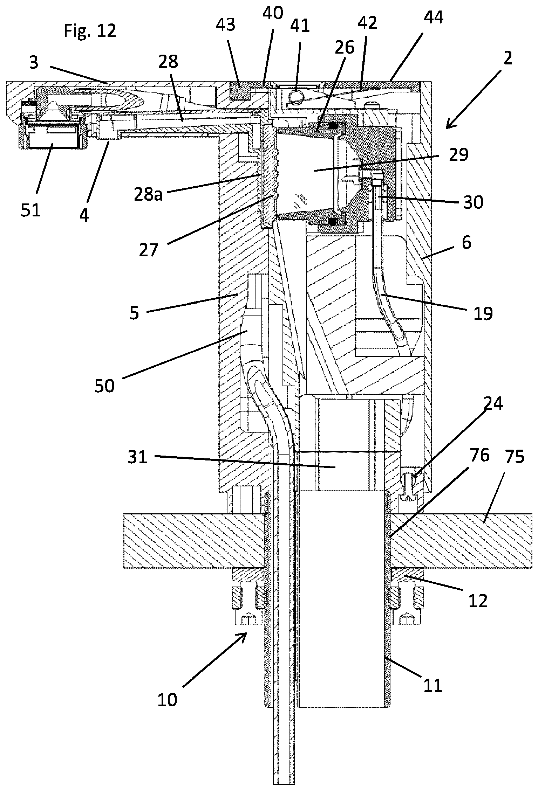

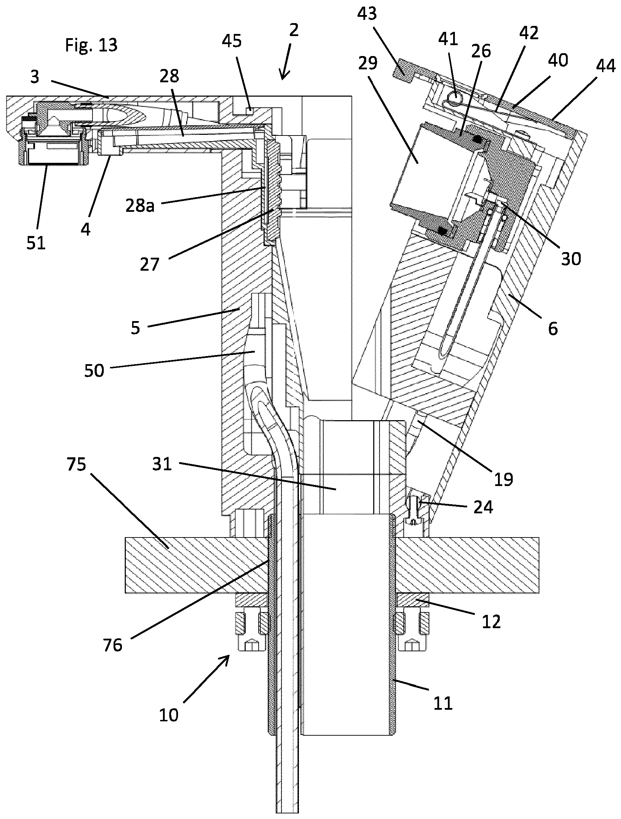

Figures 12 and 13 show an alternative embodiment of a preparing and dispensing unit 2 in the closed position and the open position, respectively. The preparing and dispensing unit 2 is configured for preparing, by means of capsules, a hot drink and for dispensing it at a dispensing opening 4, and for dispensing hot or boiling water at a dispensing opening 51. Like the other embodiments described above, the preparing and dispensing unit 2 has a tap part 5 and a closure part 6, wherein the closure part 6 is hingeably attached to the tap part 5 at pivot pin 24. The tap part 5 is fitted, by means of a mounting device 10, in an opening 76 provided in a worktop 75. The mounting device 10 comprises a mounting bush 11 and a fastening nut 12.

The operating buttons of the device are not illustrated, but can be provided at any suitable location, for example on the side of the tap part 5 or on the flat top side of the preparing and dispensing unit.

The hot or boiling water, which comes from a source of hot or boiling water which is placed below the worktop 75, can be passed through the preparing and dispensing unit 2 to the dispensing opening 51 (see for example Figure 7) via a hot or boiling water channel 50. Via hot water channel 19, hot water can be passed to the capsule chamber 26 for preparing a hot drink by means of a capsule placed in the capsule chamber 29.

In the embodiment of Figures 12 and 13, the outflow 3 in which the dispensing opening 4 for hot drinks and the dispensing opening 51 for hot or boiling water are placed, is provided at the top side of the preparing and dispensing unit 2, in which, in the closed position of the closure part 7, the upper surface of the outflow 3 and the tap part 5, which form a single unit, and the closure part 6 are flush. This makes it possible to achieve an attractive appearance of the preparing and dispensing unit 2. Also, if desired, a maximum space between the dispensing opening 4 and the worktop 75 is thus created or, by contrast, a more compact preparing and dispensing unit 2 is produced, with the space between the dispensing opening 4 and the worktop 75 remaining the same. Due to the fact that the outflow 3 is in a high position, at least a substantial portion of the capsule chamber 29 is situated lower than the dispensing opening 4. On the side of the press plate 27 facing away from the capsule chamber 29, there is a cylindrical space 28a which, at its top side, is connected to that part of the dispensing channel 28 which is situated in the outflow 3. The hot drink prepared in the capsule chamber will enter this space 28a via the press plate 27 before flowing to the outflow 3. The hot drink which is still situated in this space 28a after the hot drink has been dispensed, will not flow to the dispensing opening 4 which is located in a higher position, but will, when the capsule chamber is opened, flow back down through the press plate 27, where it can be discharged, for example via the capsule discharge channel 31, to a capsule collecting tray 23 located under the worktop 75.

In order to limit the amount of hot drink which thus flows back into the capsule chamber 29, the volume of the space 28a is relatively small. The depth of this space is preferably at most 3 mm, for example between 0.5 and 2 mm. The diameter of this space is determined by the dimensions of the capsule and is thus less easy to reduce.

The preparing and dispensing unit 2 comprises a locking device to lock the closure part 6 in the closed position with respect to the tap part 5, so that the closure part 6 cannot unintentionally move to the open position. The locking device comprises a plate-shaped closing flap 40 which is fastened to the closure part 6 so as to be able to hinge about hinge pin 41. A spring element 42 is provided to pretension the closing flap 40 to the locking position, as is illustrated in Figures 12 and 13. In this locking position, the upper surface of the closing flap in the closed position is flush with the upper surfaces of the outflow 3, the tap part 5, and the closure part 6.

At a first end, the closing flap 40 comprises a hook 43 which is configured to cooperate with a hook portion 45 provided on the tap part 5. At the opposite, second end, the closing flap comprises an operating surface 44. By pushing the operating surface 44, the closing flap 40 can be tilted about the pivot pin 41, counter to the action of the spring element 42, to a free position. In the free position, the hook 43 does not hook into the hook portion 45, and the closure part 6 can be moved from the closed to the open position. Optionally, a torsion spring or another resilient element may be provided which is pretensioned to move the closure part 6 into the open position.

Due to the circular path of the closure part and the design of the hook 43 and the hook portion 45, the closing flap 40 will be tilted when moving the closure part 6 from the open position to the closed position, in such a manner that the hook 43 is pushed over the hook portion 45, and subsequently hooks behind the hook portion 45 due to the spring force of the spring element 42, locking the closure part 6 with respect to the tap part 5. In order to move the closure part 6 to the closed position, it is also possible to tilt the closing flap 40 to the free position by pushing on the operating surface 44.

It should be noted that the preparing and dispensing unit may also be provided without a dispensing opening 51 for hot or boiling water and an associated hot or boiling water channel 50. In addition or alternatively, it is also possible to provide a cooled water channel with a cooled water dispensing opening which can be connected to a water cooling device.

## Claims

1. A dispensing device (1) for dispensing a hot drink, comprising:
a hot water device (13) for providing hot water,
a preparing and dispensing unit (2) configured for preparing and dispensing the hot drink, comprising:
a capsule holder (26) for holding a capsule (90) in a capsule chamber (29),
a dispensing opening (4) for dispensing a hot drink, and
a dispensing channel (28) for passing a hot drink from the capsule chamber to the dispensing opening, and
a hot water channel (19) for passing hot water from the hot water device to the capsule chamber,
**characterized in that**
the hot water device (13) comprises a cold water inlet which is to be connected to a cold water supply (17), and a heating device (36) for heating water, and
the hot water device (13) comprises a tank (100) for keeping water at a temperature of above 95 degrees Celsius, preferably at least 100 degrees Celsius, and a hot water outlet (101a) connected to the tank, wherein the hot water outlet is connected to the hot water channel (19) and wherein a cooling device (103) is provided for cooling down the hot water to a temperature suitable for preparing the hot drink.

2. The dispensing device (1) as claimed in claim 1, wherein the cooling device (103) comprises a heat exchanger (103) which is configured to exchange heat between hot water originating from the hot water outlet (101a) and cold water which is flowing into the tank (100) via the cold water inlet (108).

3. The dispensing device (1) as claimed in claim 1, wherein the cooling device (103) comprises a mixing device which is configured to mix the hot water originating from the hot water outlet with cold water.

4. The dispensing device (1) as claimed in any of claims 1-3, wherein the dispensing device furthermore comprises a hot or boiling water channel (50) for passing hot or boiling water to a hot or boiling water dispensing opening (51), which is provided in the preparing and dispensing unit (2), wherein the dispensing device is configured such that, after the mounting device has been mounted in the opening (76), the hot or boiling water channel leads through the opening, wherein the hot water device comprises a second hot water outlet (101b) which is connected to the tank, wherein the second hot water outlet is connected to the hot or boiling water channel.

5. The dispensing device (1) as claimed in any of the preceding claims, wherein the dispensing device is configured such that, after mounting, the hot water device (13) is positioned on a side of the opening (76), and the capsule holder (26) and the dispensing opening (4) are positioned at an opposite side of the opening.

6. The dispensing device (1) as claimed in any of the preceding claims, wherein the preparing and dispensing unit (2) comprises a capsule discharge channel (31) for discharging the capsule (90) after the hot drink has been prepared, wherein the dispensing device is configured such that the capsule discharge channel leads through the opening (76) after mounting.

7. The dispensing device (1) as claimed in claim 6, wherein the capsule discharge channel (31) comprises a flexible tubular element (22) which is configured for attaching a collecting bag to a discharge end to collect several capsules (90) discharged via the discharge channel.

8. The dispensing device (1) as claimed in any of the preceding claims, wherein the hot water device (13) comprises a pump (34) for increasing the pressure of the water.

9. The dispensing device (1) as claimed in any of the preceding claims, wherein the hot water device (13) comprises a flow sensor (33) for measuring the amount of hot water to be dispensed.

10. The dispensing device (1) as claimed in any of the preceding claims, wherein the dispensing device comprises a water cooling device (200) for providing cooled water, and a cooled water channel (201) for passing cooled water from the water cooling device to a cooled water dispensing opening (52) which is provided in the preparing and dispensing unit (2), wherein the dispensing device is configured such that, after mounting of the mounting device in the opening (76), the cooled water channel leads through the opening.

11. The dispensing device (1) as claimed in any of the preceding claims, wherein the preparing and dispensing unit (2) comprises a mounting device (10) for mounting the preparing and dispensing unit onto or in an opening (76), in particular an opening in a worktop (75), and wherein the preparing and dispensing unit (2) is designed such that, after mounting the mounting device onto or in the opening, the hot water channel (19) leads through the opening.

12. The dispensing device (1) as claimed in claim 11, wherein the mounting device (10) comprises a mounting bush (11) which can be placed through the opening and which extends on a bottom side of the preparing and dispensing unit, and which can be fastened on the other side of the opening by means of a fastening element (12), wherein the hot water channel (19) leads through the mounting bush.

13. The dispensing device (1) as claimed in claim 11 or 12, wherein the mounting bush (11) is provided with screw thread on an outer side, and wherein the fastening element (12) comprises a fastening nut which can be screwed onto the screw thread.

14. The dispensing device (1) as claimed in any of the preceding claims, wherein the hot water device (13) comprises a tank (100) for keeping water at a temperature of at least 100 degrees Celsius.

15. The dispensing device (1) as claimed in any of the preceding claims, wherein the dispensing device comprises a tap part (5) and a closure part (6) which is movable with respect to the tap part, wherein the tap part and the closure part define the capsule chamber (29), wherein the closure part is movable with respect to the tap part between at least a closed position, in which the capsule chamber formed by the tap part and the closure part is closed for preparing the hot drink, and an open position, in which a capsule can be placed in the capsule chamber and can be removed after use.

## Patentansprüche

1. Abgabevorrichtung (1) zum Abgeben eines heißen Getränks, umfassend:
eine Heißwasservorrichtung (13) zum Bereitstellen von heißem Wasser,
eine zum Zubereiten und Abgeben des heißen Getränks ausgestaltete Zubereitungs- und Abgabeeinheit (2), umfassend:
einen Kapselhalter (26) zum Halten einer Kapsel (90) in einer Kapselkammer (29),
eine Abgabeöffnung (4) zum Abgeben eines heißen Getränks und
einen Abgabekanal (28) zum Leiten eines heißen Getränks von der Kapselkammer zu der Abgabeöffnung und
einen Heißwasserkanal (19) zum Leiten von heißem Wasser von der Heißwasservorrichtung zu der Kapselkammer,
**dadurch gekennzeichnet, dass**
die Heißwasservorrichtung (13) einen mit einer Kaltwasserversorgung (17) zu verbindenden Kaltwassereinlass und eine Heizvorrichtung (36) zum Erhitzen von Wasser umfasst, und
wobei die Heißwasservorrichtung (13) einen Tank (100), um Wasser auf einer Temperatur von über 95 Grad Celsius, vorzugsweise mindestens 100 Grad Celsius, zu halten, und einen mit dem Tank verbundenen Heißwasserauslass (101a) umfasst, wobei der Heißwasserauslass mit dem Heißwasserkanal (19) verbunden ist und wobei eine Kühlvorrichtung (103) zum Abkühlen des heißen Wassers auf eine für die Zubereitung des heißen Getränks geeignete Temperatur vorgesehen ist.

2. Abgabevorrichtung (1) nach Anspruch 1, wobei die Kühlvorrichtung (103) einen Wärmetauscher (103) umfasst, der dazu ausgestaltet ist, Wärme zwischen heißem Wasser, das aus dem Heißwasserauslass (101a) stammt, und kaltem Wasser, das über den Kaltwassereinlass (108) in den Tank (100) strömt, auszutauschen.

3. Abgabevorrichtung (1) nach Anspruch 1, wobei die Kühlvorrichtung (103) eine Mischvorrichtung umfasst, die dazu ausgestaltet ist, das aus dem Heißwasserauslass stammende heiße Wasser mit kaltem Wasser zu mischen.

4. Abgabevorrichtung (1) nach einem der Ansprüche 1 - 3, wobei die Abgabevorrichtung ferner einen Heiß- oder Siedewasserkanal (50) zum Leiten von heißem oder siedendem Wasser zu einer Heiß- oder Siedewasserabgabeöffnung (51) umfasst, die in der Zubereitungs- und Abgabeeinheit (2) vorgesehen ist, wobei die Abgabevorrichtung so ausgestaltet ist, dass der Heiß- oder Siedewasserkanal nach dem Einbau der Montagevorrichtung in der Öffnung (76) durch die Öffnung führt, wobei die Heißwasservorrichtung einen zweiten Heißwasserauslass (101b) umfasst, der mit dem Tank verbunden ist, wobei der zweite Heißwasserauslass mit dem Heiß- oder Siedewasserkanal verbunden ist.

5. Abgabevorrichtung (1) nach einem der vorhergehenden Ansprüche, wobei die Abgabevorrichtung so ausgestaltet ist, dass die Heißwasservorrichtung (13) nach der Montage auf einer Seite der Öffnung (76) positioniert ist und der Kapselhalter (26) und die Abgabeöffnung (4) auf einer gegenüberliegenden Seite der Öffnung positioniert sind.

6. Abgabevorrichtung (1) nach einem der vorhergehenden Ansprüche, wobei die Zubereitungs- und Abgabeeinheit (2) einen Kapselaustragkanal (31) zum Austragen der Kapsel (90) nach der Zubereitung des heißen Getränks umfasst, wobei die Abgabevorrichtung so ausgestaltet ist, dass der Kapselaustragkanal nach der Montage durch die Öffnung (76) führt.

7. Abgabevorrichtung (1) nach Anspruch 6, wobei der Kapselaustragkanal (31) ein flexibles rohrförmiges Element (22) umfasst, das zum Anbringen eines Sammelbeutels an einem Austragende zum Sammeln mehrerer über den Austragkanal ausgetragener Kapseln (90) ausgestaltet ist.

8. Abgabevorrichtung (1) nach einem der vorhergehenden Ansprüche, wobei die Heißwasservorrichtung (13) eine Pumpe (34) zum Erhöhen des Drucks des Wassers umfasst.

9. Abgabevorrichtung (1) nach einem der vorhergehenden Ansprüche, wobei die Heißwasservorrichtung (13) einen Durchflusssensor (33) zum Messen der Menge an abzugebendem heißem Wasser umfasst.

10. Abgabevorrichtung (1) nach einem der vorhergehenden Ansprüche, wobei die Abgabevorrichtung eine Wasserkühlvorrichtung (200) zum Bereitstellen von gekühltem Wasser und einen Kanal (201) für gekühltes Wasser zum Leiten von gekühltem Wasser von der Wasserkühlvorrichtung zu einer Abgabeöffnung (52) für gekühltes Wasser, die in der Zubereitungs- und Abgabeeinheit (2) vorgesehen ist, wobei die Abgabevorrichtung so ausgestaltet ist, dass der Kanal für gekühltes Wasser nach Montage der Montagevorrichtung in der Öffnung (76) durch die Öffnung führt.

11. Abgabevorrichtung (1) nach einem der vorhergehenden Ansprüche, wobei die Zubereitungs- und Abgabeeinheit (2) eine Montagevorrichtung (10) zum Montieren der Zubereitungs- und Abgabeeinheit an oder in einer Öffnung (76), insbesondere einer Öffnung in einer Arbeitsplatte (75), umfasst und wobei die Zubereitungs- und Abgabeeinheit (2) so ausgebildet ist, dass der Heißwasserkanal (19) nach dem Montieren der Montagevorrichtung an oder in der Öffnung durch die Öffnung führt.

12. Abgabevorrichtung (1) nach Anspruch 11, wobei die Montagevorrichtung (10) eine durch die Öffnung platzierbare Montagebuchse (11) aufweist, die sich an einer unteren Seite der Zubereitungs- und Abgabeeinheit erstreckt und die auf der anderen Seite der Öffnung mittels eines Befestigungselements (12) befestigbar ist, wobei der Heißwasserkanal (19) durch die Montagebuchse führt.

13. Abgabevorrichtung (1) nach Anspruch 11 oder 12, wobei die Montagebuchse (11) an einer Außenseite mit einem Gewinde versehen ist und wobei das Befestigungselement (12) eine auf das Gewinde aufschraubbare Befestigungsmutter umfasst.

14. Abgabevorrichtung (1) nach einem der vorhergehenden Ansprüche, wobei die Heißwasservorrichtung (13) einen Tank (100) umfasst, um Wasser auf einer Temperatur von mindestens 100 Grad Celsius zu halten.

15. Abgabevorrichtung (1) nach einem der vorhergehenden Ansprüche, wobei die Abgabevorrichtung ein Zapfteil (5) und ein in Bezug auf das Zapfteil bewegliches Verschlussteil (6) umfasst, wobei das Zapfteil und das Verschlussteil die Kapselkammer (29) definieren, wobei das Verschlussteil in Bezug auf das Zapfteil zwischen mindestens einer geschlossenen Position, in der die durch das Zapfteil und das Verschlussteil gebildete Kapselkammer zur Zubereitung des heißen Getränks verschlossen ist, und einer offenen Position, in der eine Kapsel in die Kapselkammer platziert und nach Gebrauch entfernt werden kann, beweglich ist.

## Revendications

1. Dispositif de distribution (1) pour la distribution d'une boisson chaude comportant :
un dispositif d'eau chaude (13) pour fournir de l'eau chaude,
une unité de préparation et de distribution (2) conçue pour préparer et distribuer la boisson chaude, comportant :
un support de capsule (26) pour supporter une capsule (90) dans une chambre pour capsule (29),
une ouverture de distribution (4) pour distribuer une boisson chaude, et
un canal de distribution (28) pour faire passer une boisson chaude de la chambre pour capsule à l'ouverture de distribution, et
un canal d'eau chaude (19) pour faire passer de l'eau chaude du dispositif d'eau chaude à la chambre pour capsule,
**caractérisé en ce que**
le dispositif d'eau chaude (13) comprend une entrée d'eau froide destinée à être reliée à une alimentation en eau froide (17), et un dispositif de chauffage (36) pour chauffer l'eau, et
le dispositif d'eau chaude (13) comprend un réservoir (100) pour maintenir l'eau à une température supérieure à 95 degrés Celsius, de préférence au moins 100 degrés Celsius, et une sortie d'eau chaude (101a) reliée au réservoir, la sortie d'eau chaude étant reliée au canal d'eau chaude (19) et un dispositif de refroidissement (103) étant prévu pour refroidir l'eau chaude à une température appropriée pour préparer la boisson chaude.

2. Dispositif de distribution (1) selon la revendication 1, dans lequel le dispositif de refroidissement (103) comporte un échangeur thermique (103) conçu pour échanger de la chaleur entre de l'eau chaude provenant de la sortie d'eau chaude (101a) et de l'eau froide qui s'écoule dans le réservoir (100) par l'entrée d'eau froide (108).

3. Dispositif de distribution (1) selon la revendication 1, dans lequel le dispositif de refroidissement (103) comporte un dispositif mélangeur conçu pour mélanger l'eau chaude provenant de la sortie d'eau chaude avec de l'eau froide.

4. Dispositif de distribution (1) selon l'une quelconque des revendications 1 à 3, le dispositif de distribution comprenant en outre un canal d'eau chaude ou bouillante (50) pour faire passer de l'eau chaude ou bouillante vers une ouverture de distribution d'eau chaude ou bouillante (51), située dans l'unité de préparation et de distribution (2), le dispositif de distribution étant conçu de telle sorte que, après montage du dispositif de montage dans l'ouverture (76), le canal d'eau chaude ou bouillante traverse l'ouverture, le dispositif d'eau chaude comprenant une seconde sortie d'eau chaude (101b) reliée au réservoir, la seconde sortie d'eau chaude étant reliée au canal d'eau chaude ou bouillante.

5. Dispositif de distribution (1) selon l'une quelconque des revendications précédentes, le dispositif de distribution étant conçu de telle sorte que, après montage, le dispositif d'eau chaude (13) est positionné sur un côté de l'ouverture (76), et le support de capsule (26) et l'ouverture de distribution (4) sont positionnés sur un côté opposé de l'ouverture.

6. Dispositif de distribution (1) selon l'une quelconque des revendications précédentes, dans lequel l'unité de préparation et de distribution (2) comprend un canal d'évacuation de capsule (31) pour évacuer la capsule (90) après la préparation de la boisson chaude, le dispositif de distribution étant conçu de telle sorte que le canal d'évacuation de capsule traverse l'ouverture (76) après montage.

7. Dispositif de distribution (1) selon la revendication 6, dans lequel le canal d'évacuation de capsule (31) comprend un élément tubulaire flexible (22) qui est conçu pour la fixation d'un sac collecteur à une extrémité d'évacuation pour recueillir plusieurs capsules (90) évacuées par le canal d'évacuation.

8. Dispositif de distribution (1) selon l'une quelconque des revendications précédentes, dans lequel le dispositif d'eau chaude (13) comporte une pompe (34) pour augmenter la pression de l'eau.

9. Dispositif de distribution (1) selon l'une quelconque des revendications précédentes, dans lequel le dispositif d'eau chaude (13) comprend un capteur de débit (33) pour mesurer la quantité d'eau chaude à distribuer.

10. Dispositif de distribution (1) selon l'une quelconque des revendications précédentes, le dispositif de distribution comprenant un dispositif de refroidissement d'eau (200) pour fournir de l'eau refroidie, et un canal d'eau refroidie (201) pour faire passer l'eau refroidie du dispositif de refroidissement d'eau à une ouverture de distribution d'eau refroidie (52) située dans l'unité de préparation et de distribution (2), le dispositif de distribution étant conçu de telle sorte que, après montage du dispositif de montage dans l'ouverture (76), le canal d'eau refroidie traverse l'ouverture.

11. Dispositif de distribution (1) selon l'une quelconque des revendications précédentes, dans lequel l'unité de préparation et de distribution (2) comprend un dispositif de montage (10) pour le montage de l'unité de préparation et de distribution sur ou dans une ouverture (76), notamment une ouverture d'un plan de travail (75), et dans lequel l'unité de préparation et de distribution (2) est conçue de telle sorte qu'après montage du dispositif de montage sur ou dans l'ouverture, le canal d'eau chaude (19) traverse l'ouverture.

12. Dispositif de distribution (1) selon la revendication 11, dans lequel le dispositif de montage (10) comprend un manchon de montage (11) qui peut être placé à travers l'ouverture et qui s'étend sur un côté inférieur de l'unité de préparation et de distribution, et qui peut être fixé sur l'autre côté de l'ouverture au moyen d'un élément de fixation (12), le canal d'eau chaude (19) traversant le manchon de montage.

13. Dispositif de distribution (1) selon la revendication 11 ou 12, dans lequel le manchon de montage (11) est muni d'un filetage sur un côté extérieur, et dans lequel l'élément de fixation (12) comprend un écrou de fixation qui peut être vissé sur le filetage.

14. Dispositif de distribution (1) selon l'une quelconque des revendications précédentes, dans lequel le dispositif d'eau chaude (13) comporte un réservoir (100) pour maintenir l'eau à une température d'au moins 100 degrés Celsius.

15. Dispositif de distribution (1) selon l'une quelconque des revendications précédentes, le dispositif de distribution comprenant une partie robinet (5) et une partie fermeture (6) qui est mobile par rapport à la partie robinet, la partie robinet et la partie fermeture définissant la chambre pour capsule (29), la partie fermeture étant mobile par rapport à la partie robinet entre au moins une position de fermeture, dans laquelle la chambre pour capsule formée par la partie robinet et la partie fermeture est fermée pour préparer la boisson chaude, et une position d'ouverture, dans laquelle une capsule peut être placée dans la chambre pour capsule et peut être retirée après utilisation.
